# EUROPÄISCHE PATENTSCHRIFT

(11) **EP 1 957 288 B1**
(45) Veröffentlichungstag und Bekanntmachung des Hinweises auf die Patenterteilung: **02.01.2013**
(21) Anmeldenummer: 06754415.5
(22) Anmeldetag: 16.06.2006
(51) Int. Cl.: B42D 15/10

(54) **VERFAHREN ZUR HERSTELLUNG EINER GEFALTETEN TRÄGERANORDNUNG, INSBESONDERE FÜR EIN IDENTIFIKATIONSDOKUMENT SOWIE EINE TRÄGERANORDNUNG**
METHOD OF PRODUCING A FOLDED CARRIER ARRANGEMENT, IN PARTICULAR FOR AN IDENTIFICATION DOCUMENT, AND A CARRIER ARRANGEMENT
PROCÉDÉ DE FABRICATION D UN ARRANGEMENT PORTEUR PLIÉ, NOTAMMENT POUR UN DOCUMENT D IDENTIFICATION AINSI QU UN ARRANGEMENT PORTEUR

(30) Priorität: 29.11.2005 DE 102005057241
(43) Veröffentlichungstag der Anmeldung: 20.08.2008
(73) Patentinhaber: Bundesdruckerei GmbH, 10958 Berlin (DE)
(72) Erfinder: MÜLLER, Carsten, 14979 Kleinbeeren (DE); SEIJO BOLLIN, Hans-Peter, 10245 Berlin (DE)
(74) Vertreter: Maser, Jochen
(86) Internationale Anmeldenummer: PCT/EP2006/005814
(87) Internationale Veröffentlichungsnummer: WO 2007/062696

(56) Entgegenhaltungen:
- EP-A- 1 516 749
- EP-A1- 0 917 966
- EP-A2- 1 690 698
- WO-A-98/19870
- WO-A1-01/66362
- DE-B- 1 099 991
- FR-A1- 2 595 847

## Beschreibung

Die Erfindung betrifft ein Verfahren zur Herstellung einer gefalteten Trägeranordnung, insbesondere zur Weiterverarbeitung in einem Identifikations- oder Wertdokument oder zur Fertigstellung als Endprodukt eines Identifikations- oder Wertdokumentes sowie eine Trägeranordnung für oder als Identifikationsdokument oder Wertdokument.

Ein Wertdokument, wie beispielsweise ein Reisepass, besteht aus einem Buchblock und einer Passkarte, welche miteinander verbunden werden, bevor diese mit einem Bucheinband beziehungsweise einer Buchdecke zu einem Passbuch verbunden werden. Der Buchblock ist zumeist aus einem Papier oder papierähnlichen Material hergestellt, welches Sicherheitsmerkmale umfasst. Die Passkarte weist eine Vielzahl von Sicherheitsmerkmalen auf und im Falle eines Reisepasses wird der Buchblock passend zur Passkarte personalisiert.

Solche buchartige Wertdokumente werden, wie beispielsweise aus der DE 10 2004 008 840 A1 bekannt ist, mit einer Transpondereinheit versehen, um kontaktlos Daten auslesen zu können und um diese mit den gedruckten Daten des Wertdokumentes zu vergleichen. Darüber hinaus können weitere Merkmale in einer solchen Transpondereinheit abgespeichert werden und als weitere Sicherheitsmerkmale dienen. Solche Transpondereinheiten sind in einer Trägeranordnung vorgesehen, die als sogenannte Prelaminate als Zwischenprodukt bereitgestellt werden. Diese Prelaminate umfassen einen mehrschichtigen Aufbau und weisen dadurch eine gewisse Steifigkeit auf. Nach dem Einbringen solcher Trägeranordnungen in einen Bucheinband weisen die buchartigen Wertdokumenge den Nachteil auf, dass diese sich immer wieder von selbst öffnen. Darüber hinaus ist beim Falzen des Wertdokuments eine erhöhte Kraft erforderlich.

Aus der DE 1 099 991 ist eine aus Kunststoff geschweißte Buchbanddecke bekannt. Diese Buchdecke umfasst einen Deckel, der durch je eine aufgeschweißte Hartfolie versteift ist. Die Deckfolie besteht aus einer Kunststofffolie, welche in einem Stück Decke und Rücken bildet. Diese Deckfolie ist zur Deckung eines Falzbereiches mit einer Auskehlung von einem halbkreisförmigen Querschnitt versehen, die in die Decke eingepresst ist. Somit wirkt dieser Bereich beim Aufklappen des Buches wie ein Gelenk.

Aus der PCT/US 01/07292 ist ein Katalog bekannt, der mehrere Katalogseiten aus Laminatschichten umfasst. Diese Katalogseiten werden über eine Lasche durch eine Schraub-Klemm-Verbindung gebunden. Zwischen der Lasche und den Katalogseiten ist zur Bildung eines Falzbereiches eine Anzahl der Laminatschichten reduzierte Anordnung vorgesehen.

Der Erfindung liegt deshalb die Aufgabe zugrunde, ein Verfahren zur Herstellung einer leicht zu faltenden Trägeranordnung oder einer gefalteten Trägeranordnung zu schaffen sowie eine Trägeranordnung bereitzustellen, welche leicht zu falten ist und einen geringen Selbstöffnungseffekt umfasst oder sich selbständig in einem zusammengefalteten Zustand hält bzw. sich in diesem Zustand nach einem Auffalten selbst überführt.

Diese Aufgabe wird erfindungsgemäß durch ein Verfahren gemäß den Merkmalen des Anspruchs 1, sowie einer Trägeranordnung gemäß den Merkmalen des Anspruchs 9 ermöglicht. Weitere vorteilhafte Ausgestaltungen und Weiterbildungen sind in den jeweiligen abhängigen Ansprüchen angegeben.

Durch das erfindungsgemäße Verfahren zur Herstellung einer leicht zu faltenden oder gefalteten Trägeranordnung wird ermöglicht, dass durch die Einbringung einer Profilierung in einen Falzbereich des Prelaminates eine Verringerung der Steifigkeit des Prelaminates im Falzbereich erzielt wird. Dadurch kann ein Zusammenfalten des Bogenformats mit einer geringeren Kraft ermöglicht werden. Gleichzeitig ist ein geringer Selbstöffnungseffekt gegeben. In besonderen Ausgestaltungen kann sogar ein selbsthaltender Effekt erzielt werden, das heißt, dass nach dem Auffalten der Trägeranordnung zur Ansicht der Daten des Dokumentes ein selbstständiges Zusammenfalten ermöglicht wird. Die Einbringung der Profilierung kann während der Herstellung des Prelaminates erfolgen, bei dem ein Haftbund aus wenigstens zwei Schichten durch Pressen oder Laminieren ausgebildet werden. Alternativ kann die Profilierung in ein im Bogenfornat bereitgestelltes Prelaminat eingebracht werden.

In den Falzbereich der Trägeranordnung wird Wärme eingebracht, so dass die Profilierung unter Temperatureinwirkung erfolgt. Dadurch wird ermöglicht, dass eine ursprüngliche Steifigkeit von Bogenformaten eines Prelaminates nach einer sogenannten "Umformung" dafür ausgenutzt wird, dass sich die Trägeranordnung im gefalzten Zustand selbst hält. Die aufgeschlagene Seite kann sich selbständig wieder zusammenfalten beziehungsweise die Trägeranordnung kehrt selbstständig in einen gefalteten Zustand zurück. Solche Prelaminatbögen umfassen insbesondere zumindest eine zwischen zumindest zwei Lagen eingebrachte Transpondereinheit. Durch die Einbringung einer Profilierung im Falzbereich wird ermöglicht, dass ein Formgedächtnis der Trägeranordnung eines ebenen Bogens oder Bandmaterials im Falzbereich aufgelöst wird und nach dem Einbringen der Profilierung sowie einer anschließenden Faltung auf diesen neuen gefalteten Zustand abgespeichert wird. Diese sogenannte "Umformung" bewirkt, dass der Falzbereich wie ein Scharnier mit einer Vorspannung wirkt, so dass nach dem Aufklappen der Seiten ein selbständiges Schließen der Seiten ermöglicht ist. Gleichzeitig wird die Kraft zum Schließen der Seiten erheblich verringert. Die Trägerandordnung schließt sich somit von selbst, so dass nur im Bedarfsfall ein Öffnen erfolgt und die Personalisierdaten sichtbar gemacht werden.

Bevorzugt wird die Trägeranordnung im gefalteten Zustand zumindest teilweise während einer Abkühlphase gehalten. Dadurch kann das Formgedächtnis der Trägeranordnung nachhaltiger auf die neue gefaltete Anordnung eingestellt werden. Die Abkühlphase kann durch die Zuführung von Luft unterstützt werden. Ebenso kann vorgesehen sein, dass die Abkühlphase durch eine oder mehrere kurze Aufheiz- oder Erwärmungsphasen unterbrochen wird, um die Ausprägung des Formgedächtnisses zu stärken oder ein dickeres Material schonend zu behandeln.

Nach einer bevorzugten Ausgestaltung des Verfahrens ist vorgesehen, dass die Profilierung in das im Bogenformat vorliegende Prelaminat eingebracht wird. Dadurch kann bis zu diesem Schritt eine einfache Handhabung und Zuführung des Materials ermöglicht sein. Alternativ hierzu kann vorgesehen sein, dass das im Bogenformat bereitgestellte Prelaminat vorgefaltet ist, um anschließend über ein Werkzeug die Profilierung einzubringen. Des Weiteren kann alternativ vorgesehen sein, dass das Prelaminat als Rollenware bereitgestellt wird und von der Rolle kontinuierlich oder diskontinuierlich gearbeitet wird.

Bevorzugt wird die Profilierung auf einer Innenseite des Falzbereiches eingebracht und eingeprägt. Dadurch können enge Biegeradien im Falzbereich erzielt werden. Zusätzlich kann die Kraft zum Zusammenfalten der Seiten erheblich minimiert werden.

Nach einer weiteren vorteilhaften Ausgestaltung des Verfahrens wird durch den Prägedruck und/oder Größe und/oder Anzahl der Profile zur Bildung der Profilierung die Vorspannkraft der gefalteten Trägeranordnung bestimmt. Dadurch kann eine Anpassung an unterschiedliche Materialien des Prelaminates als auch an verschiedene Schichtaufbauten der Prelaminate ermöglicht sein, um eine selbsthaltende gefaltete Trägeranordnung herzustellen. Die Profile sind bevorzugt als Vertiefungen auf einer Seite und Erhöhungen auf der gegenüberliegenden Seite des Prelaminats ausgebildet. Es erfolgt im Wesentlichen eine Durchprägung, die ein Zusammenfalten begünstigt ohne dass im Wesentlichen die Schichtdicke des Prelaminats verringert ist.

Nach einer weiteren vorteilhaften Ausgestaltung des Verfahrens ist vorgesehen, dass die Trägeranordnung aus einem Bogenformat, welches als Blattware bereitgestellt wird oder aus einem Bandmaterials, welches als Rollenware bereitgestellt wird, vor dem Einbringen der Profilierung ausgestanzt wird. Dadurch wird ermöglicht, dass das vollständige Aufklappen der Trägeranordnung nach dem Einbringen der Profilierung entfällt, um die Vorspannkraft vollständig aufrecht zu erhalten. Alternativ kann vorgesehen sein, dass Trägeranordnung nach dem Einbringen der Profilierung im gefalteten Zustand auf das geforderte Außenmaß zur Weiterverarbeitung oder für das Endprodukt ausgestanzt oder zugeschnitten wird.

Nach einer weiteren alternativen Ausgestaltung des Verfahrens ist vorgesehen, dass die Profilierung als zumindest eine und zumindest einseitige Vertiefung während der Herstellung des Prelaminats eingebracht wird. Durch eine solche zumindest einseitige Profilierung in Form einer Vertiefung wird ermöglicht, dass die Steifigkeit des Bogenformates verringert wird. Dadurch lässt sich das Bogenformat leichter falten, wobei die Vertiefung einen definierten Faltbereich darstellt.

Nach einer weiteren vorteilhaften Ausgestaltung der als Vertiefung ausgebildeten Profillerung ist vorgesehen, dass zumindest eine Schicht des als Haftverbund ausgebildeten Prelaminates aus einem Thermoplasten oder thermoplastischen Elastomer ausgebildet wird. Dadurch kann durch ein Fließpressen die Vertiefung irreversibel in das Prelaminat eingebracht werden.

Die erfindungsgemäße Trägeranordnung weist den Vorteil auf, dass im Falzbereich des Prelaminats eine Profilierung zur Verringerung der Steifigkeit eingebracht ist. Dadurch kann ein leichtes Falten des Bogenformats sowie eine selbsthaltende Anordnung nach dem Falten ermöglicht werden. Somit weist die Trägeranordnung nach dem Einbringen einer Profilierung in den Falzbereich eine Vorspannkraft in dem Falzbereich auf. Diese Vorspannkraft wirkt nach dem Auffalten der Trägeranordnung als Rückstellkraft so, dass die aufgefalteten Seiten selbständig in den gefalteten Zustand zurückkehren. Gleichzeitig wird aufgrund der verringerten Steifigkeit im Falzbereich ein selbstständiges Auffalten des Prelaminats verhindert, welches in einem geschlossenen Zustand zusammengefaltet ist. Eine solche Trägeranordnung kann als Zwischenprodukt für ein Identifikations- oder Wertdokument vorgesehen sein. Ebenso kann diese Trägeranordnung ein Endprodukt eines Identifikations- oder Wertdokument bilden.

Nach einer weiteren Ausführungsform ist vorgesehen, dass die Profilierung unter Einfluss von Wärme eingebracht ist und der die Profillerung umfassende Falzbereich in einer gefalteten Anordnung zumindest teilweise abgekühlt wird, so dass der Falzbereich eine Vorspannung aufweist. Durch dieses Zuführen von Wärme beziehungsweise der Einbringung der Profilierung unter Einfluss von Wärme wird sowohl der Umformvorgang erleichtert als auch eine Veränderung der Struktur des Materials erzielt, um nach dem Abkühlen eine Vorspannung aufzuweisen.

Bevorzugt sind die Vertiefungen im Falzbereich durchgedrückt. Dies bedeutet, dass das Material im Falzbereich, auf welches das Werkzeug zur Einbringung der Profilierung einwirkt, nicht gequetscht, sondern auf der gegenüberliegenden Seite als Ausprägung vorliegt. Dadurch kann eine im Wesentlichen durchgehende Dicke der Trägeranordnung ohne Schwächung des Materials aufrechterhalten bleiben.

Die Trägeranordnung weist zumindest eine Transpondereinheit zwischen zwei Schichten des mehrschichtigen Aufbaus des Prelaminatbogens auf. Der Falzbereich wird bevorzugt derart gelegt, dass dieser benachbart zu der beziehungsweise den Transpondereinheiten im Prelaminatbogen ausgebildet ist. Somit kann eine Beeinträchtigung der Funktion der Transpondereinheit durch die Einbringung der Profilierung ausgeschlossen werden.

Die Trägeranordnung wird bevorzugt als Vorsatz oder Personalisierungsdatenseite oder als Inlay in einer Buchdecke als Identifikationsdokument oder als Zugangsberechtigung eingesetzt. Bei einem buchartigen Wertdokument wie beispielsweise einem Reisepass kann in einer ersten Ausführungsform die Trägeranordnung zur Bildung einer Passdecke beziehungsweise einer Personalisierungsdatenseite dienen. Dabei kann sich an den Falzbereich anstelle einer vollständigen Seite, die der Personalisierungsdatenseite gegenüber liegt, auch nur ein Überstand anschließen. Des Weiteren kann die Trägeranordnung als Vorsatz einer Buchdecke ausgebildet sein. Die Trägeranordnung erstreckt sich vorteilhafterweise auf eine innere Vorder- und Rückseite der Buchdecke. Des Weiteren kann alternativ vorgesehen sein, dass die Trägeranordnung als Inlay in einer Buchdecke vorgesehen ist. Bei diesem Ausführungsbeispiel erstreckt sich die Trägeranordnung bevorzugt links und rechts zum Falzbereich über die gesamte Fläche der Buchdecke. Darüber hinaus kann die gefaltete Trägeranordnung als Endprodukt ausgebildet sein und als Identifikationsdokument, Zugangsberechtigung, Führerschein oder dergleichen dienen. Durch das selbständige Positionieren der Seiten in einer zusammengefalteten Anordnung, können bevorzugt auf den jeweiligen Innenseiten die Personalisierdaten vorgesehen sein.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
- Figur 1: eine perspektivische Darstellung eines buchartigen Identifikationsdokumentes mit einer bindungsgemäßen Trägeranordnung,
- Figur 2: eine schematische Schnittdarstellung des Identifikationsdokumentes gemäß Figur 1,
- Figur 3: eine schematische Ansicht auf eine erfindungsgemäße Trägeranordnung unmittelbar nach Einbringung einer Profilierung,
- Figur 4: eine perspektivische Ansicht der erfindungsgemäßen Trägeranordnung.

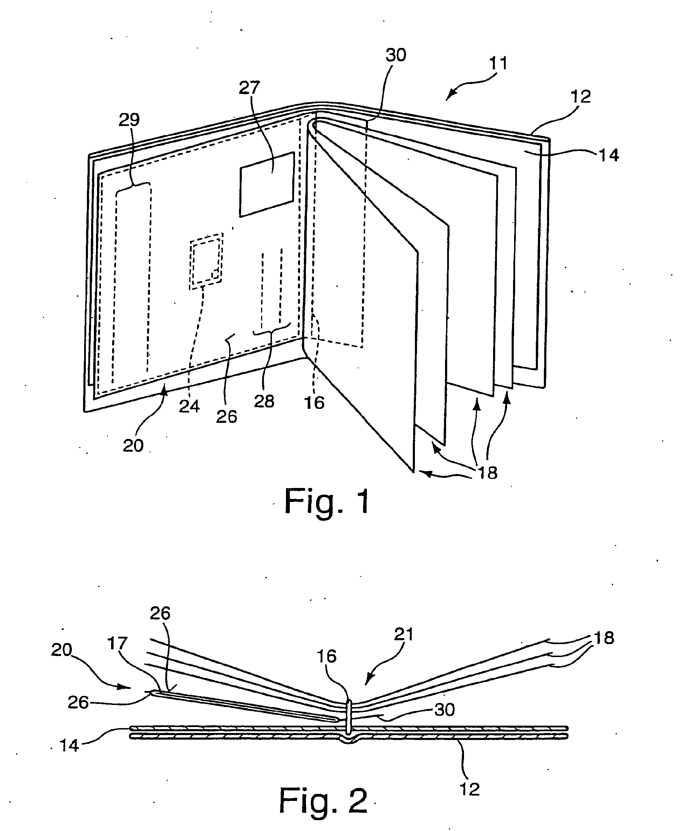

In Figur 1 ist beispielhaft ein buchartiges Dokument 11 dargestellt. Bei diesem Dokument 11 handelt es sich um ein Identifikationsdokument wie einen Reisepass. Das Dokument 11 umfasst eine Buchdecke 12, die mit einem Bucheinband versehen sein kann. Auf einer Innenseite der Buchdecke 12 ist ein Vorsatz 14 vorgesehen, der an der Buchdecke 12 befestigt ist. Über eine gemeinsame Naht 16 ist eine Trägeranordnung 17 mit Innenseiten 18 mit dem Vorsatz 14 verbunden. Die Innenseiten 18 des buchartigen Dokumentes 11 dienen zur Aufnahme von Visa oder Stempeln oder sonstigen Eintragungen.

In Figur 2 ist eine schematische Schnittdarstellung des buchartigen Dokumentes 11 gemäß Figur 1 dargestellt. Der Aufbau der Buchdecke 12 in Figur 2 ist nur beispielhaft. Eine Vorder- und Rückseite kann aus verstärktem Papier, einer Pappe, einer Kunststofffolie, Gewebe und/oder Vlies oder einer Kombination hiervon ausgebildet sein. Alternativ kann auch ein mehrschichtiger Aufbau zur Bildung der Buchdecke 12 vorgesehen sein. Auf die Buchdecke 12 wird das Vorsatz 14 aufgebracht, das sich über die vordere und hintere Innenseite der Buchdecke 12 erstreckt.

Bei der in Figur 2 dargestellten Ausführungsform ist die Trägeranordnung 17 beispielsweise aus einem Prelaminat hergestellt und Grundbestandteil für eine Personalisierdatenseite 20. Bei solchen Prelaminaten für die Trägeranordnung 17 handelt es sich um Zwischenprodukte, die zur Weiterverarbeitung vorgesehen sind. Solche Prelaminate weisen einen mehrschichtigen Aufbau zumeist aus Kunststofffolien, Gewebe- und/oder Vliesschichten auf. Zwischen zwei Schichten ist bevorzugt eine Transpondereinheit 24 vorgesehen. Solche Transpondereinheiten 24 werden durch ein Gussverfahren oder eine Laminiertechnik komplett eingearbeitet. Zusätzlich kann auf der Trägeranordnung 17 ein- oder beidseitig eine folienartige Trägerschicht oder Deckschicht 26 vorgesehen sein, welche zum Schutz vor Beschädigungen und/oder von Verschmutzungen dient und/oder als weiteres Sicherheitsmerkmal ausgebildet ist. Dies ist fakultativ. Zumindest eine Außenseite der Trägeranordnung 17 ist drucktechnisch behandelbar. Auf dieser werden beispielsweise gemäß Figur 1 ein Dekor und/oder Personalisierungsdaten aufgebracht. Diese Seite kann gemäß dem ICAO-Standard ausgebildet sein. Es können somit ein Foto 27 des Dokumenteninhabers, eine OCR maschinenlesbare ICAO- Zeile 29 und weitere Personalisierdaten 28 aufgebracht sein. Die Transpondereinheit 24 ist beispielhaft in einem mittleren Bereich der Trägeranordnung 17 vorgesehen. Alternativ kann die Transpondereinheit 24 auch im Randbereich oder nahe dem Nahtbereich positioniert werden.

Die als Prelaminat ausgebildete Trägeranordnung 17, welche die Transpondereinheit 24 aufnimmt, kann als Deckschicht auf der Ober- und/oder Unterseite aus einem Faservlies, Papiervlies, kaschierten und/oder verpressten Papier- und/oder Vliesmaterial, Verbundmaterialien aus Vliesstoffen und/oder Thermoplasten und/oder thermoplastischen Elastomeren ausgebildet sein.

Des weiteren kann vorgesehen sein, dass eine Innen- und/oder Außenseite des Faltbereiches mit einer Beschichtung und/oder Verstärkung vorgesehen sein, um die Vorspannung zu unterstützen. Diese Beschichtung und/oder Verstärkung kann vor, während oder nach dem Einbringen der Profilierung vorgesehen sein. Sofern unter Zuführung von Wärme die Einbringung der Profilierung erfolgt, wird das An- oder Aufbringen der Beschichtung und/oder Erwärmung noch vor dem vollständigen Abkühlen erfolgen.

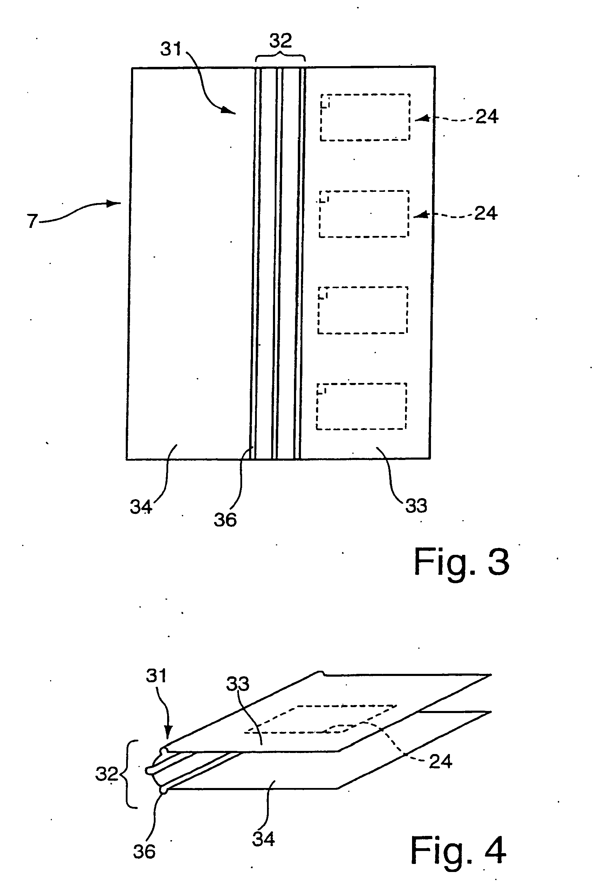

Die Herstellung einer Trägeranordnung 17, welche beispielsweise als Personalisierdatenseite 20 in einem Reisepass gemäß Figur 1 und 2 vorgesehen ist, wird anhand den Figuren 3 und 4 näher beschrieben.

Die als Prelaminat ausgebildete Trägeranordnung 17 wird in einem Bogenformat bereitgestellt. In diesem Bogen sind mehrere Transpondereinheiten 24 in regelmäßigen Abständen zueinander angeordnet. Ein solcher Bogen wird einer Vorrichtung zur Einbringung einer Profilierung 31 in einem Falzbereich 32 zugeführt. Eine solche Vorrichtung kann aus einer Matrize und Patrize bestehen, um die rillenförmige Profilierung 31 einzubringen. Die Matrize kann als Prägestempel ausgebildet sein. Alternativ kann auch ein Rillenwerkzeug eingesetzt werden. Vor und/oder während dem Einbringen der Profilierung 31 wird der Falzbereich 32 erwärmt. Dadurch werden die Strukturen der einzelnen Schichten aufgeweicht, so dass während dem Einbringen der Profilierung 31 ein einfaches Nachgeben der Struktur ermöglicht ist. Insbesondere bei Schichten, die Kunststoffe beinhalten oder ausschließlich aus Kunststoffen gebildet sind, kann ein Nachfließen der Polymere ermöglicht sein. Dadurch wird eine Rissbildung an der Oberfläche der Schichten verhindert. Nach dem Einbringen der Profilierung 31 wird die im Bogenformat vorliegende Trägeranordnung zusammengefaltet, so dass eine erste und zweite an den Falzbereich 32 angrenzende Seite 33 und 34 übereinanderliegend angeordnet sind, wie dies beispielsweise in Figur 4 dargestellt ist. In dieser Anordnung wird der Falzbereich 32 abgekühlt, wodurch die Struktur der Trägeranordnung 17 im Falzbereich 32 neu orientiert wird. Das Formgedächtnis der Struktur wird somit von einer Ausrichtung in einer Ebene im Bogenformat in eine gefalzte Anordnung umprogrammiert. Dadurch wird erzielt, dass der Falzbereich 32 als eine Art Scharnier mit einer Vorspannung ausgebildet ist, welche nach dem Öffnen der Seiten 33 und 34 selbständig in dem zusammengefalteten Zustand zurückkehrt.

Bei dem Ausführungsbeispiel gemäß Figur 3 wird die Profilierung 31 entlang eines gesamten Bogenformates eingebracht und im Anschluss daran eine Ausstanzung oder ein Schnitt für das Endmaß der einzelnen Trägeranordnungen 17 gesetzt. Alternativ kann auch gleichzeitig mit dem Einbringen der Profilierung ein Stanzvorgang vorgesehen sein, der die Trägeranordnungen 17 auf das gewünschte Fertigmaß zuschneidet.

Die gefaltete Trägeranordnung 17 gemäß Figur 4 kann als Zwischenprodukt vorgesehen sein, welches als Vorsatz 14 auf eine Buchdecke 12 aufgebracht wird, wie dies beispielsweise in Figur 2 dargestellt ist. Die Trägeranordnung 17 kann auch als Buchdecke verwendet werden, die mit oder ohne Vorsatz 14 versehen ist. Des Weiteren kann diese Trägeranordnung 17 als Personalisierdatenseite eingesetzt werden, wobei wahlweise die Seite 34 vollständig als Datenseite 18 verbleibt oder gekürzt wird, um einen Überstand 30 zu bilden. Die Trägeranordnung 17 gemäß Figur 4 kann auch als Endprodukt nach einer Beschriftung beziehungsweise Individualisierung ausgebildet sein. Des Weiteren kann die Trägeranordnung 14 zur Fertigstellung als Endprodukt eine Schutzschicht oder Trägerschicht auf der Außen- und Innenseite aufgebracht werden.

Die Profilierung im Falzbereich der Trägeranordnung besteht bevorzugt aus mehreren mit Abstand zueinander angeordneten rillenförmigen Vertiefungen. Diese können beispielsweise wannenförmig, halbkreisförmig oder bogensegmentförmig ausgebildet sein. Durch solche Vertiefungen können fließende Übergänge an den Oberflächen der Trägeranordnung geschaffen werden, so dass Rissbildungen oder Schwächungen der Strukturen verhindert werden. Die als Prelaminate ausgebildeten Trägerstrukturen weisen zumeist Beschichtungen oder Bestandteile aus Kunststoff auf, die mit weiterem Papier oder gewebe- und/oder vliesähnlichen Materialien zusammenwirken. Durch die vorteilhafte Ausgestaltung der Vertiefungen können die Eigenschaften der Materialien beibehalten und die Vorspannkraft aufrechterhalten bleiben.

Nach einer bevorzugten Ausführungsform der Trägeranordnung ist vorgesehen, dass die Vertiefungen auf einer Innenseite des Falzbereiches vorgesehen sind. Dadurch können kleine Radien erzielt werden. Zudem tragen die Vertiefungen nicht zur Innenseite hin auf.

Nach einer alternativen Ausführungsform der Profilierung in der Trägeranordnung ist vorgesehen, dass die Profilierung als zumindest einseitig und zumindest eine ausgebildete Vertiefung der Schichtdicke des Prelaminats ausgebildet ist. Dadurch kann bei einer ersten Ausführungsform eine nur einseitig ausgebildete Schwächung der Schichtdicke erfolgen. Alternativ können auch einander gegenüberliegend Vertiefungen im Prelaminat eingebracht werden. Des Weiteren können ein- oder beidseitig mehrere Vertiefungen im Abstand zueinander vorgesehen sein, die einander gegenüberliegend oder versetzt zueinander angeordnet sind. Des Weiteren kann bevorzugt vorgesehen sein, dass deren Profilierung rechteckig, oval, rund, dreieckig oder dergleichen ist, wobei sowohl in der Geometrie gleichartige als auch verschiedene Querschnitte der Vertiefungen in einem Falzbereich vorgesehen sein können.

Ein Herstellungsschritt für eine erfindungsgemäße Trägeranordnung sieht vor, dass das Einbringen einer Vertiefung 36 mit einem Presswerkzeug, welches eine rechteckförmige Erhöhung aufweist, erfolgt. Dazwischenliegend ist die Trägeranordnung 17 als Prelaminat dargestellt. Bei diesem Verfahrensschritt wird die Trägeranordnung 17 als Bogenformat bereitgestellt. Alternativ kann vorgesehen sein, dass zumindest zwei Schichten, die noch nicht miteinander verbunden sind, ebenfalls zwischen dem Presswerkzeug positioniert werden und gleichzeitig mit der Einbringung der Vertiefung 36 ein Laminieren beziehungsweise Pressen der zumindest zwei Schichten erfolgt, so dass das Prelaminat als ein Haftverbund ausgebildet ist. Bevorzugt ist zur Bildung der Vertiefung im Haftverbund zumindest eine der beiden Schichten als thermoplastisches Elastomer oder als Thermoplast ausgebildet. Dadurch kann ermöglicht werden, dass unter Einwirkung von Wärme und Druck ein Fließen des Thermoplasten oder des thermoplastischen Elastomers zur Umformung des Materials in dem Bereich der Vertiefung ermöglicht wird. Bevorzugt wird bei der Verwendung eines Polyethylens als Thermoplast die Schicht auf ca. 80° C aufgeheizt. Beim Einsatz von einem thermoplastischen Elastomer wird eine Presstemperatur von ca. 120° C eingestellt. Somit kann in einem Arbeitsgang das Pressen beziehungsweise Laminieren sowie das Einbringen von zumindest einer Vertiefung 36 vorgesehen sein.

Die Ausgestaltung der Erhöhung am Presswerkzeug als Rechteck ist nur beispielhaft. Die Querschnitte können jegliche Geometrie annehmen und beispielsweise als ovale, runde, dreieckige oder sägezahnförmige Erhöhungen ausgebildet sein.

Bei einer alternativen Ausführungsform umfasst das Presswerkzeug zwei einander gegenüberliegende Erhöhungen, die je eine Vertiefung 36 zur Verjüngung der Schichtdicke des Prelaminats bewirken.

Bei einer weiteren alternativen Ausführungsform des Presswerkzeuges sind zwei auf einer Seite mit Abstand zueinander angeordnete dreieckförmige Erhöhungen dargestellt, die jeweils eine Vertiefung 36 ausbilden. Der Abstand zwischen den beiden Vertiefungen 36 kann beispielsweise an die Dicke des Buchinlays angepasst werden, so dass der dazwischenliegende Bereich einen Buchrücken ausbildet.

Alternativ zur vorstehend beschriebenen diskontinuierlichen Herstellung des Prelaminats ist ein Verfahrensschritt zur kontinuierlichen Herstellung von Vertiefungen 36 in einem Prelaminat bei gleichzeitigem Laminieren oder Pressen von wenigstens zwei Schichten vorgesehen. Am Außenumfang von Druckwalzen sind Erhöhungen vorgesehen, die die Vertiefung 36 in das Prelaminat einbringen. Gleichzeitig ist der Abstand der Druckwalzen beziehungsweise deren Umfangsflächen derart bemessen, dass die zumindest zwei Schichten laminiert oder gepresst werden.

Alle vorgenannten Ausführungsformen haben gemeinsam, dass die Einwirkung von Druck und Temperatur derart ausgestellt werden, dass ein Haftverbund zwischen den einzelnen Schichten mit einer Transponderlage sichergestellt ist.

Die Vertiefungen 36, die eine Verringerung der Schichtdicke des Prelaminates umfassen, können einer weiteren Behandlung durch Wärme unterzogen werden, um eine gefaltete Anordnung auszugestalten, wie dies in Figur 4 dargestellt ist.

Des Weiteren kann alternativ vorgesehen sein, dass ein Falzbereich 32 verschiedene Profilierungen 31 umfasst. Beispielsweise können eine durchgedrückte Vertiefung und benachbart dazu nur eine die Schichtdicke verjüngende Vertiefung vorgesehen sein. Beliebige Kombinationen und Anordnungen sind möglich, um einen Falzbereich 32 auszubilden.

Nach einer bevorzugten Ausgestaltung des Verfahrens ist vorgesehen, dass vor und/oder während dem Einbringen der Profilierung dem Falzbereich Wärme zugeführt wird. Dadurch kann das Prelaminat gleichmäßig im Falzbereich aufgeheizt werden, um im Anschluss daran oder während dem Halten einer Bearbeitungstemperatur die Profilierung einzubringen. Dadurch wird die Änderung der Struktur im Prelaminatbogen erleichtert.

Die Wärme wird bevorzugt durch eine Heizplatte eingebracht, auf der der Falzbereich aufliegt und/oder auf der Seite, auf welcher nachfolgend das Werkzeug angreift. Des Weiteren kann die Einbringung der Wärme durch Wärmestrahlung oder durch eine Warmluftzufuhr erfolgen.

Nach einer weiteren vorteilhaften Ausgestaltung des Verfahrens ist vorgesehen, dass die Profilierung mit einem aufgeheizten Werkzeug eingebracht wird. Dadurch kann das zumeist aus metallischem Material bestehende Werkzeug gleichzeitig als Wärmeübertragungselement dienen. Dadurch ist eine kostengünstige Herstellung ermöglicht.

Bevorzugt wird die Profilierung durch einen Prägestempel oder ein Rillenwerkzeug eingebracht. Darüber lassen sich präzise Profilierungen mit unterschiedlichen Strukturen einbringen und hohe Kräfte übertragen.

Die Einbringung einer Profilierung in den Falzbereich kann alternativ durch einen oder mehrere Heizdrähte erfolgen. Diese Heizdrähte können einer runden, quadratischen oder mehreckigen Querschnitt oder weitere Freiformen und gegebenenfalls in Längsrichtung verlaufende Profilierungen aufweisen.

Die Profilierung wird bevorzugt durch ein Werkzeug eingebracht, welches sich vollständig entlang des Falzbereiches erstreckt und Vertiefungen einprägt. Dadurch kann in einem Arbeitsgang die Profilierung vollständig in den Prelaminatbogen eingebracht werden. Zudem kann in Abhängigkeit der Dicke des Prelaminat die Tiefe der Einprägung abgestimmt sein.

Nach einer weiteren vorteilhaften Ausgestaltung ist vorgesehen, dass die Profilierung durch zwei einander gegenüberliegende Einprägungen ausgebildet wird. Dadurch kann eine gleichmäßige Verjüngung der Schichtdicke von jeder Seite des Bogenformates erfolgen, welche ermöglicht, dass bei der Weiterverarbeitung eine Ausrichtung der Trägeranordnung nicht erforderlich ist, da nach beiden Seiten die gleiche Leichtigkeit für das Falten der Trägeranordnung gegeben ist.

Nach einer weiteren vorteilhaften Ausgestaltung des Verfahrens ist vorgesehen, dass beim Laminieren oder Pressen durch wenigstens ein Werkzeug mit zumindest einer linienförmigen Erhöhung die zumindest eine Vertiefung zur Ausbildung der Profilierung eingebracht wird. Dabei kann das Werkzeug sowohl für ein diskontinuierliches als auch ein kontinuierliches Verfahren ausgebildet werden. Beim diskontinuierlichen Verfahren werden Werkzeuge wie Matrizen und Patrizen eingesetzt. Beim kontinuierlichen Verfahren können Walzen mit entsprechend daran angebrachten Erhöhungen verwendet werden.

Sämtliche vorgenannten Merkmale sind jeweils für sich erfindungswesentlich und können beliebig miteinander kombinierbar sein.

## Patentansprüche

1. Verfahren zur Herstellung einer gefalteten Trägeranordnung (17), insbesondere zur Weiterverarbeitung in einem Identifikations- oder Wertdokument oder zur Fertigstellung als Endprodukt eines Identifikations- oder Wertdokumentes,
- bei dem in einem Falzbereich (32) der Trägeranordnung (17) eine Profilierung (31) eingebracht wird,
- wobei in den Falzbereich (32) der Trägeranordnung (17) Wärme eingebracht wird, **dadurch gekennzeichnet,**
- **dass** bei der Trägeranordnung (17), die als ein Haftverbund aus wenigstens zwei Schichten ausgebildet und zu einem Prelaminat laminiert oder gepresst wird, während dem Laminieren und Pressen der wenigstens zwei Schichten in den Falzbereich (32) des Prelaminats die Profilierung (31) zur Bildung der gefalteten Trägeranordnung (17) eingebracht wird oder dass bei der Trägeranordnung (17), die als Prelaminat mit einem mehrschichtigen Aufbau in einem Bogenformat bereitgestellt wird, in den Falzbereich (32) des Prelaminats eine Profilierung (31) zur Bildung der gefalteten Trägeranordnung (17) eingebracht wird und
- **dass** nach dem Einbringen der Profilierung (31) die sich an den Falzbereich (32) anschließenden Seiten (33, 34) übereinandergefaltet werden.

2. Verfahren nach Anspruch 1, **dadurch gekennzeichnet, dass** nach dem Einbringen der Profilierung (31) die Trägeranordnung (17) im gefalteten Zustand zumindest teilweise während einer Abkühlphase gehalten wird.

3. Verfahren nach Anspruch 1, **dadurch gekennzeichnet, dass** die Profilierung (31) in das ungefaltete Bogenformat der Trägeranordnung (17) oder während dem Laminieren oder Pressen des Bogenformates eingebracht wird.

4. Verfahren nach Anspruch 1, **dadurch gekennzeichnet, dass** die Profilierung (31) auf einer Innenseite des Falzbereiches (32) der Trägeranordnung (17) eingebracht wird.

5. Verfahren nach Anspruch 1, **dadurch gekennzeichnet, dass** die Vorspannung der gefalteten Trägeranordnung (17) durch einen vorbestimmten Prägedruck und/oder Größe der Rillen und/oder Anzahl der Rillen zur Herstellung der Profilierung (31) im wesentlichen ohne Verringerung der Schichtdicke des Prelaminats bestimmt werden.

6. Verfahren nach Anspruch 1, **dadurch gekennzeichnet, dass** die Trägeranordnung (17) aus einem Bogenformat als Blattware oder aus einem Bandmaterial als Rollenware vor dem Einbringen der Profilierung (31) ausgestanzt wird.

7. Verfahren nach Anspruch 1, **dadurch gekennzeichnet, dass** die Pro**filierung** (31) als zumindest eine und zumindest einseitig ausgebildete Vertiefung der Schichtdicke während oder nach der Herstellung des Prelaminats eingebracht wird.

8. Verfahren nach Anspruch 7, **dadurch gekennzeichnet, dass** die Vertiefung durch ein Fließpressen in das Prelaminat während oder nach der Bildung eines Haftverbundes aus wenigstens zwei Schichten eingebracht wird, wobei insbesondere zumindest eine der beiden Schichten aus einem Thermoplasten oder thermoplastischen Elastomer ausgebildet ist.

9. Trägeranordnung für ein Identifikationsdokument oder Wertdokument nach einem Verfahren gemäß einem der Ansprüche 1 bis 8, welche in einem Falzbereich (32) eine Profilierung (31) aufweist, **dadurch gekennzeichnet, dass** die Trägeranordnung (17) als Prelaminat ausgebildet ist und einen mehrschichtigen Aufbau aufweist, dass zwischen zwei Seiten (33, 34) des Prelaminats der Falzbereich (32) ausgebildet ist, der eine Profilierung (31) zur Verringerung der Steifigkeit des Prelaminats aufweist und dass der die Profilierung (31) umfassende Falzbereich (32) eine Vorspannung aufweist, so dass die Seiten (33, 34) eine zusammengefaltete Anordnung einnehmen.

10. Trägeranordnung nach Anspruch 9, **dadurch gekennzeichnet, dass** der die Profilierung (31) umfassende Falzbereich (32) in einer gefalteten Anordnung zur zumindest teilweisen Abkühlung gehalten wird, so dass der Falzbereich (32) eine Vorspannung aufweist.

11. Trägeranordnung nach Anspruch 9, **dadurch gekennzeichnet, dass** die Profilierung (31) Vertiefungen (36) aufweist, die im Falzbereich (32) durchgedrückt sind.

12. Trägeranordnung nach Anspruch 9, **dadurch gekennzeichnet, dass** zwischen zwei Schichten des mehrschichtigen Aufbaus des Prelaminats zumindest eine Transpondereinheit (24) vorgesehen ist und der Falzbereich (32) benachbart zur Transpondereinheit (24) vorgesehen ist.

13. Trägeranordnung nach Anspruch 9, **dadurch gekennzeichnet, dass** die Trägeranordnung (17) als Vorsatz, als Personalisierdatenseite oder als Inlay in einer Buchdecke eines Passbuches oder als Identifikationsdokument oder Zugangsberechtigung vorgesehen ist.

## Claims

1. A method of producing a folded carrier arrangement (17), in particular for further processing in an identification document or document of value or for completing as an end product of an identification document or document of value,
- in which a profiling (31) is formed in a fold area (32) of the carrier arrangement (17) and
- heat is supplied in the fold area (32) of the carrier arrangement (17)
**characterized in,**
- **that** for the carrier arrangement (17), which is formed as a adhesive composite of at least two layers and is laminated or pressed to form a pre-laminate and, during the laminating and pressing of the at least two layers, the profiling (31) is introduced into the fold area (32) of the pre-laminate in order to form the folded carrier arrangement (17), or in that for the carrier arrangement (17), which is provided as a pre-laminate with a multilayered structure in a sheet format, the profiling (31) is introduced into the fold area (32) of the pre-laminate in order to form the folded carrier arrangement (17), and
- **that** following the introduction of the profiling (31), the sides (33, 34) adjoining the fold area (32) are folded over each other.

2. The method as claimed in claim 1, **characterized in that**, following the introduction of the profiling (31), the carrier arrangement (17) is kept in the folded state, at least to some extent, during a cooling phase.

3. The method as claimed in claim 1, **characterized in that** the profiling (31) is introduced into the unfolded sheet format of the carrier arrangement (17) or during the laminating or pressing of the sheet format.

4. The method as claimed in claim 1, **characterized in that** the profiling (31) is introduced on an inside of the fold area (32) of the carrier arrangement (17).

5. The method as claimed in claim 1, **characterized in that** the pre-stress of the folded carrier arrangement (17) is determined by the predetermined impressing pressure and/or the size of the grooves and/or the number of grooves for forming the profiling (31) substantially without reducing the layer thickness of the pre-laminate.

6. The method as claimed in claim 1, **characterized in that** the carrier arrangement (17) is punched out of a sheet format as sheet goods or out of a strip material as roll goods, before the introduction of the profiling (31).

7. The method as claimed in claim 1, **characterized in that** the profiling (31) is introduced as at least one depression of the layer thickness formed at least on one side, during or after the production of the pre-laminate.

8. The method as claimed in claim 7, **characterized in that** the depression is introduced into the pre-laminate by extrusion molding, during or after the formation of a adhesive composite from at least two layers, in particular at least one of the two layers being formed from a thermoplastic or thermoplastic elastomer.

9. A carrier arrangement for an identification document or document of value, according to a method as claimed in one of claims 1 to 8, which comprises in a fold area (32) a profiling (31), **characterized in that** the carrier arrangement (17) is formed as a pre-laminate and has a multilayered structure, that the fold area (32) which has profiling (31) in order to reduce the rigidity of the pre-laminate is formed between two sides (33, 34) of the pre-laminate, and that the fold area (32) comprising the profiling (31) has a pre-stress, so that the sides (33, 34) assume a folded-together arrangement.

10. The carrier arrangement as claimed in claim 9, **characterized in that** the fold area (32) comprising the profiling (31) is kept in a folded arrangement for the at least partial cooling, so that the fold area (32) has a pre-stress.

11. The carrier arrangement as claimed in claim 9, **characterized in that** the profiling (31) has depressions (36) which are pressed through in the fold area (32).

12. The carrier arrangement as claimed in claim 9, **characterized in that** at least one transponder unit (24) is provided between two layers of the multilayered structure of the pre-laminate, and the fold area (32) is provided adjacent to the transponder unit (24).

13. The carrier arrangement as claimed in claim 9, **characterized in that** the carrier arrangement (17) is provided as an end paper, as a personalization data page or as an inlay in a book cover of a passport book or as an identification document or access authorization.

## Revendications

1. Procédé permettant de fabriquer un arrangement porteur plié (17), notamment en vue d'un traitement ultérieur dans un document d'identification ou de valeur, ou en vue de l'élaboration d'un document d'identification ou de valeur comme produit fini,
- lors duquel un profil (31) est réalisé dans une zone de pliage (32) de l'arrangement porteur (17),
- de la chaleur étant introduite dans la zone de pliage (32) de l'arrangement porteur (17),
**caractérisé en ce que**
- dans l'arrangement porteur (17) qui est réalisé sous la forme d'un assemblage par adhérence d'au moins deux couches et qui est laminé ou pressé de manière à former un prélaminé, le profil (31) est réalisé dans la zone de pliage (32) du prélaminé pendant le laminage et le pressage desdites au moins deux couches en vue de former l'arrangement porteur plié (17), ou en ce que dans l'arrangement porteur (17) qui est fourni comme prélaminé avec une structure multicouche se présentant sous un format de feuille, un profil (31) est réalisé dans la zone de pliage (32) du prélaminé en vue de former l'arrangement porteur,plié (17), et
- après la réalisation du profil (31), les pages (33, 34) situées dans le prolongement de la zone de pliage (32) sont pliées de manière à se superposer.

2. Procédé selon la revendication 1, **caractérisé en ce que**, après la réalisation du profil (31), l'arrangement porteur (17) est maintenu dans un état plié au moins pendant une partie d'une phase de refroidissement.

3. Procédé selon la revendication 1, **caractérisé en ce que** le profil (31) est réalisé dans le format de feuille non plié de l'arrangement porteur (17) ou pendant le laminage ou le pressage du format de feuille.

4. Procédé selon la revendication 1, **caractérisé en ce que** le profil (31) est réalisé sur une face intérieure de la zone de pliage (32) de l'arrangement porteur (17).

5. Procédé selon la revendication 1, **caractérisé en ce que** la prétension de l'arrangement porteur plié (17) est déterminée par une impression en relief prédéfinie et/ou une grandeur prédéfinie des rainures et/ou un nombre prédéfini des rainures servant à réaliser le profil (31), et ce essentiellement sans réduction de l'épaisseur de couche du prélaminé.

6. Procédé selon la revendication 1, **caractérisé en ce que** l'arrangement porteur (17) est découpé, avant la réalisation du profil (31), à partir d'un format de feuille se présentant sous forme de feuilles individuelles ou à partir d'un matériau en bande se présentant sous forme de rouleau.

7. Procédé selon la revendication 1, **caractérisé en ce que** le profil (31) est réalisé pendant ou après la fabrication du prélaminé en tant qu'au moins un creux formé dans l'épaisseur de la couche, et ce sur au moins un côté de celle-ci.

8. Procédé selon la revendication 7, **caractérisé en ce que** le creux est réalisé dans le prélaminé par extrusion pendant ou après la formation d'un assemblage par adhésion d'au moins deux couches, au moins l'une des deux couches étant formée notamment en un thermoplaste ou en un élastomère thermoplastique.

9. Arrangement porteur pour un document d'identification ou un document de valeur conformément à un procédé selon l'une quelconque des revendications 1 à 8, lequel présente un profil (31) dans une zone de pliage (32), **caractérisé en ce que** l'arrangement porteur (17) est réalisé sous forme de prélaminé et présente une structure multicouche, **en ce qu'**entre deux pages (33, 34) du prélaminé est formée la zone de pliage (32) qui présente un profil (31) en vue de réduire la rigidité du prélaminé, et **en ce que** la zone de pliage (32) comprenant le profil (31) présente une prétension de sorte que les pages (33, 34) prennent une disposition repliée l'une par rapport à l'autre.

10. Arrangement porteur selon la revendication 9, **caractérisé en ce que** la zone de pliage (32) comprenant le profil (31) est maintenue dans une disposition pliée en vue d'un refroidissement au moins partiel, de sorte que la zone de pliage (32) présente une prétension.

11. Arrangement porteur selon la revendication 9, **caractérisé en ce que** le profil (31) présente des creux (36) qui sont obtenus en appliquant une pression dans la zone de pliage (32).

12. Arrangement porteur selon la revendication 9, **caractérisé en ce qu'**au moins une unité de transpondeur (24) est prévue entre deux couches de la structure multicouche du prélaminé, et que la zone de pliage (32) est prévue de manière à avoisiner l'unité de transpondeur (24).

13. Arrangement porteur selon la revendication 9, **caractérisé en ce que** l'arrangement porteur (17) est prévu comme page de garde, page réservée aux données personnelles ou inlay dans une couverture d'un passeport ou comme document d'identification ou autorisation d'accès.
